Europäisches Patentamt

European Patent Office

Office européen des brevets

(11) Veröffentlichungsnummer: **0 302 397**
**A2**

## EUROPÄISCHE PATENTANMELDUNG

(21) Anmeldenummer: 88112273.3

(22) Anmeldetag: 29.07.88

(51) Int. Cl.⁴: **B29C 45/76 , B29C 47/92 ,**
**G01N 1/10**

(30) Priorität: 05.08.87 CH 3012/87

(43) Veröffentlichungstag der Anmeldung:
08.02.89 Patentblatt 89/06

(84) Benannte Vertragsstaaten:
AT BE CH DE ES FR GB IT LI LU NL SE

(71) Anmelder: BELLAND AG
Sandmattstrasse 2
CH-4500 Solothurn(CH)

(72) Erfinder: Smidek, Otto
Rothbergstrasse 24
CH-4132 Muttenz(CH)

(74) Vertreter: Patentanwälte RUFF, BEIER und
SCHÖNDORF
Neckarstrasse 50
D-7000 Stuttgart 1(DE)

(54) Einspritz-Einrichtung für Reaktoren.

(57) Ein Einspritzventil (10) für Reaktoren wird sowohl zum Einspritzen in Reaktoren (2) als auch zur Probeentnahme aus Reaktoren verwendet.

Zur Probeentnahme wird das Ventil (10) geöffnet, so daß die Flüssigkeit, meist eine Kinststoffschmelze, durch den im Reaktor (2) herrschenden Druck aus dem Reaktor 92) hinausgepresst wird. Die herausgepreßte Flüssigkeit kann alsdann analysiert werden. Das Ventil ist zweckmäßig mit Heizung (37), Dichtung (17) sowie Verschließungs- und Leitungsmechanismen (28, 29, 26) versehen.

Durch den Einbau dieser Ventile (10) wird die Verwendungsmöglichkeit des Reaktors (2) erweitert. So sind die erfindungsgemäßen Ventile (10) nicht nur überall dort verwendbar, wo handelsübliche Ventile eingesetzt werden können, sondern auch in Einsatzgebieten, in denen bisher übliche Ventile nicht verwendbar sind, z. B. in Reaktionsextrudern.

EP 0 302 397 A2

## Einspritz-Einrichtung für Reaktoren

Die Erfindung betrifft eine Einspritz-Einrichtung für Reaktoren bzw. solche Analgen, bei denen einerseits Komponenten in einen Arbeitsraum eingebracht werden sollen. Die Erfindung betrifft daher insbesondere Einspritz-Einrichtungen für Polymerisations-Reaktoren, Reaktionsextruder o.dgl., in welchen beispielsweise Schmelzen, vor allem Kunststoffschmelzen hergestellt bzw. weiterverarbeitet werden. Bei der Herstellung bzw. Weiterverarbeitung dieser Flüssigkeiten oder Schmelzen werden an verschiedenen, in der Regel insbesondere in einer Durchflußrichtung hintereinanderliegenden, Zonen des Reaktors unterschiedliche, z.B. Additive enthaltende Flüssigkeiten eingespritzt, die Komponenten bzw. Reaktionskomponenten des herzustellenden Stoffes darstellen. Die im Reaktor entstehenden Reaktionsflüssigkeiten sind in den meisten Fällen ein Gemisch aus Kunststoffschmelzen oder aus den zum gewünschten Kunststoff umzusetzenden Komponenten.

Es besteht nun bei solchen Apparaturen bzw. Reaktoren das Bedürfnis, an verschiedenen bzw. den genannten verschiedenen Zonen des Reaktors Proben der Reaktionsflüssigkeiten zu entnehmen, um anhand von Analysen den gewünschten Verfahrensablauf bei der Herstellung des Stoffes kontrollieren zu können. Diese Proben werden bisher unter Verwendung üblicher Absperrarmaturen entnommen, welche sich im Abstand von den Einspritzventilen befinden. Z. B. ist durch die DE-OS 33 35 954 ein Extruder bekanntgeworden, bei welchem sich aus den Messwerten und den Durchflußmengen der einzelnen hintereinandergereihten Schüsse Energiebilanzen von chemischen Reaktionen, die im Extruder durchgeführt werden, errechnen lassen, wodurch Rückschlüsse auf den Reaktionsablauf gezogen werden können. Außerdem kann dieser Extruder auch noch Entnahmestellen für Substanzproben aufweisen, während Einspritzventile jedoch nicht vorgesehen sind.

Bei einer anderen bekannten Schneckenpresse zur Herstellung von Schaumkunststoffen nach der DE-PS 17 79 488 ist eine mit einem Rückschlagventil gesicherte Einrichtung zur Zuführung eines Treibmittels sowie in Förderrichtung zuvor eine Entgasungsbohrung vorgesehen, jedoch ist bei dieser bekannten Lösung eine Probenentnahme vor dem Ausgang des Reaktors nicht möglich.

Durch die DE-OS 22 53 968 ist auch ein Probenahme-Schieberventil zum Feststellen von Lecks in Brennelementen von Kernreaktoren bekanntgeworden, das einen verfahrbaren Entnahmekopf aufweist, der je in einer von einer Vielzahl von Stellungen von einer Vielzahl von Entnahmeleitungen entnimmt und jeweils in Zwischenstellungen durch Öffnungen zum Druckgefäß des Kernreaktors zurückspülen kann. Hier wird somit quasi in Kreislauf Kühlmittel dem Kernreaktor entnommen, die Radioaktivität bzw. Kontamination des Kühlmittels bestimmt und das Kühlmittel dann wieder zurückgeführt.

Schließlich ist durch die DE-PS 26 06 687 eine Vorrichtung zur Entnahme einer Probe aus einem unter Druck stehenden Reaktionsgefäß bei der Herstellung von Polyvinylchlorid nach dem Suspensions- bzw. Emulsionsverfahren bekanntgeworden, bei welcher das Reaktionsgefäß in seiner Wandung eine mit einem Absperrhahn gesicherte Membrane aufweist, die durch den Absperrhahn hindurch mit der Kanüle einer Injektionsspritze durchstochen werden kann, um eine Probe abzuziehen. Die Injektionsspritze wird dabei zuvor mit einer inerten Schutzflüssigkeit gefüllt, die nur zu dem Zweck unmittelbar vor der Probenentnahme in das Reaktionsgefäß injiziert wird, um zum Einen eine Instabilität der Dispersion in der Kanüle und damit ein Verstopfen zu vermeiden und um zum Anderen zu verhindern, daß die unter Druck gelösten Gase nach Entfernen der Kanüle aus dem Probenraum die Probe aus der Spritze drücken. Es handelt sich somit hier nicht um eine fest a Reaktionsgefäß angeordnete Einspritz-Einrichtung für in das Reaktionsgefäß einzubringende Arbeitsmedien, sondern ausschließlich um eine Probe-Entnahmeeinrichtung, mit welcher eine Schutzflüssigkeit in einer Menge eingebracht werden kann, die höchstens bis an die Größenordnung der zu entnehmenden Probenmenge reicht und außerdem keinerlei Einfluß, weder chemisch noch phyiskalisch, auf die Probe bzw. den herzustellenden Stoff ausüben darf.

Der Erfindung liegt die Aufgabe zugrunde, eine Einspritz-Einrichtung der genannten Art zu schaffen, mit welcher auf einfache Weise auch andere für den Reaktor erfoderliche Funktionen als nur der Einspritzvorgang von Reaktionskomponenten o.dgl. durchgeführt werden können.

Zur Lösung dieser Aufgabe ist bei einer Einspritz-Einrichtung für Reaktoren o.dgl., insbesondere für Polymerisations-Reaktoren, erfindungsgemäß vorgesehen, daß die Einrichtung sowohl zum Einspritzen von Reaktionskomponenten o.dgl. als auch zur Entnahme von Proben aus dem Reaktor ausgebildet ist. Dadurch kann wenig stens annähernd an derselben Stelle des Reaktors sowohl eine Komponente, z. B. eine Reaktionsflüssigkeit, ein Füllstoff o.dgl. in das Reaktionsmedium eingegeben, als auch jederzeit an dieser Stelle eine Probe des Reaktionsmediums entnommen werden. Dadurch werden auch weniger Durchbrüche der Wandung des Reaktors benötigt, als wenn gesonderte Einspritz- und Probeentnahme-Einrichtungen angebracht werden. Vorzugsweise weist das Einspritzventil eine verschließ- und temperierbare, abgedichtete Leitungsverbindung von einer reaktorseitigen Öffnung zu einem außerhalb des Reaktors leigenden Probenausgang auf, so daß einerseits Verstopfungen durch erstarrtes Probenmedium oder Probenveränderungen durch falsche Temperierung vermieden werden können und andererseits sichergestellt ist, daß keine Probensubstanzen durch undich te Stellen des Einspritzventiles in das Freie gelangen können.

Die Erfindung betrifft insofern nicht nur Einspritzventile selbst, sondern auch Apparaturen, namentlich Reaktoren, die mindestens ein solches Einspritzventil enthalten. Ferner betrifft die Erfindung ein Verfahren zur Durchführung von Reaktionen, namentlich (Co)Polymerisationen unter Verwendung solcher Ventile. Erfindungsgemäß verwendet man zur Einspeisung vorzugsweise Ventile mit einem Eintritt für den üblicherweise von einer Einspritzpumpe herkommenden Produktestrom, sowie einen verschließbaren Austritt.

Es ist zwar denkbar, für den Ausgang des Einspritzventiles in den Reaktor und für die reaktorseitige Öffnung für die Herausführung der Probe aus dem Reaktor gesonderte Öffnungen vorzusehen, jedoch ergibt sich eine besonders vorteilhafte und einfache Ausbildung, wenn für beide Funktionen eine einzige gemeinsame reaktorseitige Öffnung vorgesehen ist.

Eine besonders vorteilhafte Weiterbildung des Erfindungsgegenstandes besteht darin, daß die Leitungsverbindung bzw. die reaktorseitige Öffnung mit wengistens einem gegenüber mindestens einem Ventilsitz bewegbar angeordneten Ventilkörper verschließbar ist, so daß ein völlig druckdichter Verschluß gewährleistet ist. Sind mindestens zwei Ventile in Serie hintereinander geschaltet, so kann diese Abdichtung sowie auch die Abdichtung des Ventilgehäuses ins Freie noch weiter wesentlich verbessert werden. Die beiden Ventile sind vorteilhaft unterschiedlich, nämlich zum einen als in der Schließlage einer Sitzpressung unterworfenes Sitzventil und zum anderen als Schieberventil ausgebildet, so daß die Leitungsverbindung innerhalb des Ventilgehäuses verhältnismäßig glattflächig und im wesentlichen ohne Hinterschneidungen ausgebildet werden kann.

Liegt ein Ventil unmittelbar benachbart zur reaktorseitigen Öffnung so ergibt sich im geschlossenen Zustand dieses Ventiles nur ein äußerst geringer, gegenüber dem Reaktorinnern offener Totraum. Liegt ein Ventil umittelbar benachbart zum Probenausgang, so kann eine eventuell an diesen angeschlossene Leitung unmittelbar nach der Probenentnahme wieder entfernt werden, ohne daß die Gefahr besteht, daß größere Mengen der Probensubstanz aus dem Einspritzventil nachfließen. Durch die beiden hintereinanderliegenden Ventile ist praktisch die innerhalb des Ventilgehäuses liegende Leitungsverbindung an beiden Enden absperrbar, so daß sie zu einer nach außen völlig abgesperrten Kammer geschlossen werden kann.

Es ist zwar denkbar, das Einspritzventil als Drehventil o.dgl. auszubilden, jedoch ergibt sich eine zu bevorzugende Anordnung, wenn das Einspritzventil als Spindelventil ausgebildet ist, dessen Spindel axial verschiebbar oder durch Drehung axial verstellbar gelagert sein kann. Die Spindel stellt insofern einen Stellkörper dar, an welchem vorzugsweise beide bzw. alle Ventilkörper angeordnet sind, wobei ein oder beide Ventilkörper einteilig mit diesem Stellkörper bzw. der gesamten Spindel ausgebildet sein können. Liegt die Spindel koaxial zu dem bzw. den Ventilkörpern, so können diese in besonders einfacher Weise koaxial zur reaktorseitigen Öffnung angeordnet sein.

Es ist denkbar, den Probenausgang und den Eingang für die Reaktionskomponenten am Ventilgehäuse gesondert vorzusehen und insofern das Einspritzventil z. B. als Dreiwegeventil auszubilden. Eine besonders einfache Ausbildung ergibt sich jedoch, wenn das Einspritzventil als Zweiwegeventil ausgebildet ist bzw. wenn der Probenausgang und der Eingang für die Reaktionskomponenten durch einen einzigen Anschluß gebildet sind.

Die Leitungsverbindung innerhalb des Ventilgehäuses kann bei guten Strömungsverhältnissen realtiv kleinvolumig bzw. im Querschnitt klein gehalten werden, wenn sie durch Ausnehmungen bzw. Nuten, insbesondere zum Ventilkörper achsparallele Nuten gebildet ist, die vorzugsweise in einem Umfangsbereich um den Ventilkörper so angeordnet sind, daß sie einerseits, z. B. am Boden, vom Ventilkörper und gegenüberliegend andererseits vom Ventilgehäuse begrenzt bzw. am Umfang verschlossen sind. Dadurch kann auch trotz eines im Durchmesser bzw. in der entsprechenden Weite verhältnismäßig großen Ventilkörpers und trotz günstiger Strömungsquerschnitte eine Lage der Ausnehmungen derart gewählt werden, daß diese Ausnehmungen radial außerhalb des vorderen Ventilsitzes und radial innerhalb des hinteren Ventilsitzes liegen.

Um insbesondere bei drehbarer Anordnung des Ventilkörpers bei jeder Dreheinstellung und damit bei dedem Öffnungsgrad des Einspritzventiles eine sichere Leitungsverbindung zur Öffnung für die Ausgabe der Probe zu gewährleisten, mündet die Leitungsverbindung im hinteren Bereich in eine Ringnut, die vorzugsweise am Außenumfang des Ventilkörpers bzw. der Spindel vorgesehen ist, so daß das Ventilgehäuse eine im wesentlichen auch über den hinteren Ventilsitz durchgehend glattflächige kontinuierliche Gehäusebohrung aufweisen kann. In diese Gehäusebohrung greift der Ventilkörper bzw. die Spindel zweckmäßig mit engem Paßsitz so ein, daß durch die aneinander gleitenden Flächen bereits eine gute Abdichtung gewährleistet ist.

Die Abdichtung kann jedoch noch wesentlich weiter dadurch verbessert werden, daß in einem erweiterten Bohrungsabschnitt des Ventilgehäuses eine gesonderte, den Ventilkörper bzw. die Spindel mit Dichtungspressung umgebende Dichtung vorgesehen ist, die zweckmäßig durch axiale Spannung hinsichtlich ihrer radialen Dichtungspressung nachstellbar ist, so daß sie auch jederzeit auf den gewünschten Dichtungsdruck eingestellt werden kann. Die Dichtung ist zweckmäßig durch einen Packungssatz einer Stopfbüchse gebildet, die aneinanderschließende, im wesentliche V-förmig profilierte und daher unter Axialbelastung radial nach innen und außen ausweichende Dichtungsringe aufweist.

Ein der Nachstellung bzw. der axialen Festlegung dienendes Abschlußglied des Ventilgehäuses, nämlich z. B. eine mit Gewinde im Gehäuse geführte Spannhülse kann gleichzeitig zur Lagerung des Ventilkörpers bzw. der Spindel hinter der Dichtung dienen und hierfür z. B. außer dem Außengewinde noch ein Innengewinde für den Eingriff eines erweiterten Gewindebundes der Spindel aufweisen. Dadurch liegt auch die Stellagerung der Spindel außerhalb des die Leitungsverbindung aufweisenden abgedichteten Raumes des Ventilgehäuses.

Die Einrichtung zur Temperierung wenigstens der Leitungsver- bindung bzw. des Ventilgehäuses und/oder des Ventilkörpers und ggf. der Spindel ist zweckmäßig so ausgebildet, daß sie sowohl für eine Beheizung wie auch für eine Kühlung geeignet ist. Daher ist sie bevorzugt als Fluidheizung ausgebildet, die mit einer Temperierflüssigkeit, beispielsweise mit heißem Wärmeträgeröl betrieben werden kann. Dadurch können auch hochschmelzende und leicht erstarrende Schmelzen stets in flüssigem Zustand erhalten werden.

Eine besonders gleichmäßige Erwärmung ist möglich, wenn die Heizeinrichtung eine, insbesondere die Leitungsverbindung wenigstens teilweise umgebende, Temperierkammer mit einem Ein- und einem Austritt für das Temperierfluid aufweist, das zweckmäßig im Kreislauf so durch das Ventilgehäuse geführt wird, daß es gegenüber den in der Leitungsverbindung des Einspritzventiles fließenden Substanzen abgedichtet getrennt bleibt und das Ventilgehäuse nach Art eines Wärmetauschers auf die in der Leitungsverbindung fließenden Substanzen wirkt.

Die radiale Anschlußbohrung bzw. der zugehörigen hintere Ventilsitz kann bis nahe an die Heizeinrichtung z. B. so reichen, daß er zwischen der Heizeinrichtung und dem beheizten Mantel des Reaktors liegt und über das Ventilgehäuse mit beiden wärmeleitend verbunden ist. Durch eine verhältnismäßig lange Ausbildung der Spindel sowie deren enge Führung im Ventilgehäuse und in der Dichtung ergibt sich auch eine Wärmeleitbrücke vom Ventilgehäuse zur Spindel und damit eine Beheizung der Leitungsverbindung vom Kern des Ventilkörpers her.

Die Heizeinrichtung ist so angeordnet, daß der Ventilkörper mit zunehmendem Öffnungsgrad stärker in ihren Einflußbereich kommt, wobei insbesondere die Ringnut bei Öffnungslage wenigstens über einen Teil ihres Umfanges von der Heizeinrichtung umgeben ist.

Das erfindungsgemäße bzw. erfindungsgemäß zu verwendende Einspritzventil ist für alle Apparaturen geeignet, in die Substanzen eingeführt, insbesondere eingespritzt und aus denen Proben entnommen werden sollen, und zwar jeweils an ein und derselben Stelle. Es ist, verglichen mit bisher eingesetzten Ventilen, bedeutend vielseitiger verwendbar. Denn es kann nicht nur in bisherigen Verwendungsgebieten eingesetzt werden, sondern darüberhinaus auch noch überall dort, wo handelsübliche Ventile nicht verwendbar sind, beispielsweise in Reaktionsextrudern.

Besonders geeignet ist das Ventil für Reaktoren, etwa Reaktionsextruder, zur Durchführung von Polymerisationsreaktionen, so etwa für die (Co)-Polymerisation von (Meth)Acrylsäure und (Meth)-Acrylaten gemäß der DE-OS 34 35 468 mittels Reaktsionsextrudern nach der DE-OS 33 35 954, auf die hier wegen weiterer Einzelheiten und Wirkungen Bezug genommen wird. Die genannte Reaktion erfolgt in der Praxis etwa bei Temperaturen bis 200 Cel und Drücken bis 100 bar.

Ein besonderer Vorteil dieser Probenentnahme mittels des erfindungsgemäßen Einspritzventiles besteht darin, daß selbst verharzende Schmelzen entnommen werden können.

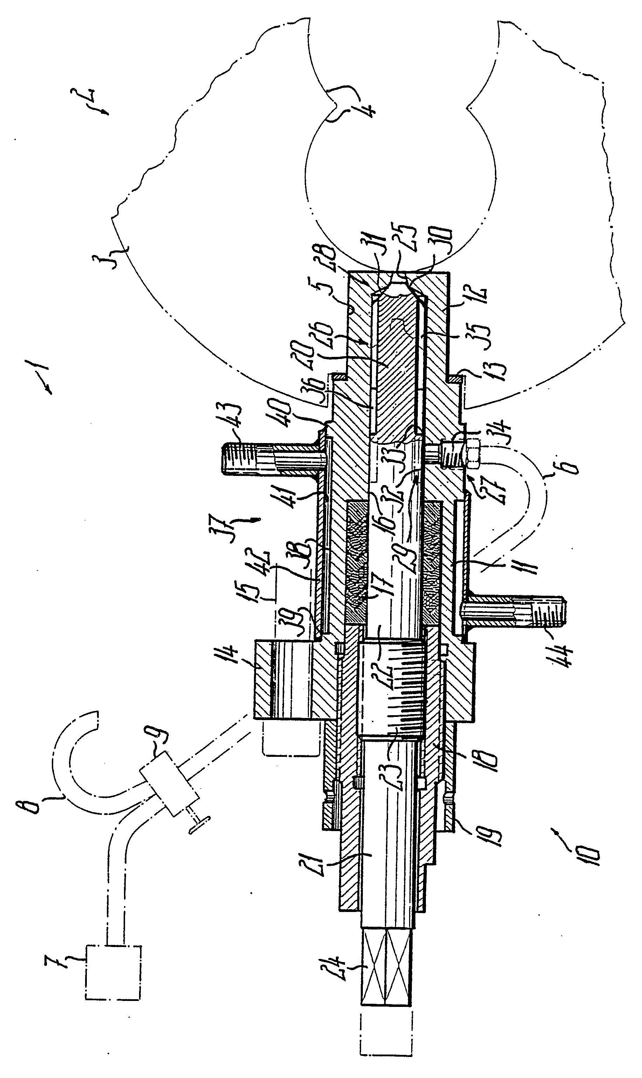

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von unterkombinationen bei einer Ausführungsform der Erindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in der Zeichnung dargestellt und wird im Folgenden näher erläutert. Die Zeichnung zeigt eine erfindungsgemäße Einspritz-Einrichtung mit im Axialschnitt dargestelltem Einspritzventil.

Die Einspritz-Einrichtung 1 gemäß der Zeichnung dient z. B. zum Betrieb bzw. zur Verwendung an einem Reaktor 2, der im dargestellten Ausführungsbeispiel ein strichpunktiert angedeuteter Schneckenextruder mit einem langgestreckten Reaktormantel 3 ist, in welchem sich zwei über seine Länge achsparallel erstreckende Schneckenbohrungen 4 befinden. In diesen beiden, einander überschneidenden Schneckenbohrungen laufen zwei nicht näher dargestellte, antreibbare Extruderschnecken, die z. B. dicht kämmend ineinander greifen und im gleichen Drehsinn rotieren. Im Bereich des einen Endes kann in die Schneckenbohrungen mindestens ein Einfüllstutzen zum Einfüllen von Kunststoff bzw. entsprechenden Ausgangskomponenten wie Monomeren münden, während im Bereich des anderen Endes der fertig hergestellte Kunststoff austritt.

Zwischen diesen beiden Enden können außerdem in den Reaktor 2 mit einer oder mehreren Einspritz-Einrichtungen 1 weitere Komponenten, wie Reaktionskomponenten zugeführt werden. Zu diesem Zweck weist der Reaktormantel 3 für jedes Einspritzventil eine etwa rechtwinklig zu seiner Längsrichtung liegende, abgestufte Aufnahmebohrung 5 auf, deren Mittelachse zweckmäßig die Mittelachse mindestens einer, insbesondere beider Schneckenbohrungen 4 schneidet. Ober eine üblicherweise von einer Einspritzpumpe 7 herkommende, strichpunktiert angedeutete Leitung 6 wird durch diese Aufnahmebohrung 5 die jeweilige Komponente unter entsprechendem Überdruck in den Reaktor eingespritzt. In der Leitung 6 kann ein Umstellventil, beispielsweise ein Dreiwegeventil vorgesehen sein, von dessen einem Ausgang eine Abzweigleitung 8 wegführt.

Die Einspritz-Einrichtung 1 weist für jeden Bereich des Reaktors 2, in welchem eine Komponente eingespritzt werden soll, mindestens ein Einspritzventil 10 auf, das in einer zugehörigen Aufnahmebohrung 5 zentriert angeordnet und gegenüber dem Reaktormantel 3 fest so verflanscht ist, daß seine Mittelachse mit derjenigen der Aufnahmebohrung 5 zusammenfällt. Alle Einspritzventile 10 können in einer gemeinsamen Axialebene liegen. Das Einspritzventil 10 weist als Grundkörper ein im wesentlichen rotationssymmetrisches Ventilgehäuse 11 mit einem vorderen, in der Außenweite reduzierten Endteil 12 auf, der eng an die Aufnahmebohrung 5 angepaßt so in diese eingreift, daß die vordere Stirnfläche des Ventilgehäuses 11 tangential zum Mantel der zugehörigen Schneckenbohrung 4 liegt. Durch den Übergang zum Endteil 12 ist an dem Ventilgehäuse 11 eine Ringschulter gebildet, die an der Ringschulter der abgesetzten Aufnahmenbohrung 5 unter Zwischenlage einer Ringdichtung 13 verspannt abgestützt ist. Zum Verspannen bzw. Verflanschen weist das Ventilgehäuse 11 am hinteren Ende einen über seinen Außenumfang vorstehenden Gehäuseflansch 14 mit mindestens zwei oder drei gleichmäßig über den Umfang verteilten Durchgangsbohrungen auf, in welche strichpunktiert angedeutete, zum Einspritzventil 10 achsparallele Befestigungsbolzen 15 eingreifen, die z. B. als Schraubbolzen unmittelbar in Gewindebohrungen des Reaktormantels 3 geführt sind, so daß das Einspritzventil 10 in radialer Richtung fest gegenüber dem Reaktormantel 3 verspannt werden kann.

In dem Ventilgehäuse 16 ist eine vom hinteren zum vorderen Ende mehrfach abgestuft im Durchmesser abnehmende Gehäusebohrung 16 vorgesehen, die in einem mittleren, weiteren Bereich für die Aufnahme einer Dichtung 17 bestimmt ist. Der Packungssatz dieser, als Stopfbüchse ausgebildeten Dichtung 17 wird mittels einer Spannhülse 18 zusammengepreßt und mit einer als Sicherheitsmutter vorgesehenen Überwurfmutter 19 abgesichert. Die Spannhülse 18 ist mit einem Außengewinde in einem an das hintere Ende des Ventilgehäuses 11 anschließenden Innengewinde geführt und steht nach hinten über das hintere Ende des Ventilgehäuses 11 bzw. des Gehäuseflansches 14 vor. Auf dem in das Innengewinde des Ventilgehäuses 11 eingreifenden Gewindeabschnitt der Spannhülse 18 ist die hülsenförmige Überwurfmutter 19 mit einem gleichen, an ihrem vorderen Endabschnitt vorgesehenen Innengewinde wie das des Ventilgehäuses 11 geführt. Die Überwurfmutter 19 kann mit ihrer vorderen, ringförmigen Stirnfläche gegen das hintere Ende des Ventilgehäuses 11 bzw. des Gehäuseflansches 14 verspannt werden.

Die Spannhülse 18 steht nach hinten über das hintere Ende der Überwurfmutter 19 vor und weist an diesem vorstehenden Ende ein Eingriffsglied für ein Werkzeug zum Drehen, beispielsweise am Außenumfang Schlüsselflächen auf. Die Überwurfmutter 19 weist am hinteren, über ihr Innengewinde vorstehenden Ende ebenfalls ein Eingriffsglied für ein Werkzeug zum Drehen, beispielsweise über den Umfang verteilte Radialbohrungen auf. Vor dem Außengewindeabschnitt weist die Spannhülse 18 einen im Durchmesser reduzierten, an den Außendurchmesser der Dichtung 17 bzw. des zugehörigen Bohrungsabschnittes angepaßten Bundansatz auf, welcher gegen die hintere Stirnfläche der Dichtung 17 verspannt werden kann, die mit ihrer vorderen Stirnfläche an einer entsprechenden, ringförmigen Übergangsschulter der Gehäusebohrung 16 abgestützt ist. Die Axialerstreckung der Dichtung 17 ist größer als ihr Außendurchmesser, während ihr Innendurchmesser nur geringfügig größer als die Hälfte ihres Außendurchmessers ist. Die hintere Stirnfläche der Dichtung 17 liegt nur geringfügig vor der vorderen Stirnfläche des Ringflansches 14.

In dem Ventilgehäuse 11 bzw. in dem nach vorne an den Bohrungsabschnitt für die Dichtung 17 anschließenden und etwa auf den Innendurchmesser der Dichtung 17 reduzierten Bohrungsabschnitt ist ein spindelförmiger Ventilkörper 20 im wesentlichen radialspielfrei geführt. Der Ventilkörper 20 ist durch das vordere, einteilige Ende einer annähernd über die gesamte Länge des Ventilgehäuses 11 durchgehenden Spindel 21 gebildet, die über das hintere Ende des Ventilgehäuses 11 bzw. der Spannhülse 18 vorsteht. Mit geringem Abstand hinter der Dichtung 17 bzw. etwa im Bereich des Gehäuseflansches 14 weist die Spindel 21 einen im Durchmesser geringfügig erweiterten, einteiligen Gewindeabschnitt 23 auf, dessen Axialerstreckung größer als sein gegenüber dem Außendurchmesser der Dichtung 17 kleinerer Durchmesser ist. Der Gewindeabschnitt 23 greift in ein Innengewinde der Spannhülse 18 ein, das von deren vorderen Ende bis etwa zum hinteren Ende iheres Außengewindeabschnittes reicht und somit ebenso wie der Gewindeabschnitt 23 über das hintere Ende des Ventilgehäuses vorstehen kann. Beiderseits des Gewindeabschnittes 23 ist die Spindel 21 gegenüber der Spannhülse 18 über ihre übrige Länge berührungsfrei und somit im hinteren bereich nur über den Gewindeabschnitt 23 und unter Zwischenschaltung der Spannhülse 18 gegenüber dem Ventilgehäuse 11 radial geführt. Beiderseits des Gewindeabschnittes 23 weist die Spindel 21 annähernd über ihre ganze Länge konstante Außendurchmesser auf, wobei sich an das vordere Ende des Gewindeabschnittes 23 ein am Umfang geschlossener zylindrischer Spindelschaft 22 anschließt, an dessen Außenumfang die Dichtung 17 in jeder Lage des Ventilkörpers 20 über ihre ganze Länge geschlossen anliegt und der nach vorne in den Ventilkörper 20 übergeht. Das hintere, aus der Spannhülse 18 vorstehende Ende der Spindel 21 ist als Betätigungsende 24 ausgebildet, das z. B. ein Eingriffsglied für ein Werkzeug zum Drehen, im dargestellten Ausführungsbeispiel einen Vierkant bildet.

Der vordere, den Spindelschaft 22 und den Ventilkörper 20 radial führende und gegenüber seinem Durchmesser mehrfach längere Bohrungsabschnitt der Gehäusebohrung 16 geht am vorderen Ende über eine ringförmige Innenschulter in eine kurze, im Durchmesser nochmals stark redutzierte Endbohrung über, die die vordere Stirnwand bzw. Stirnfläche des Ventilgehäuses 11 durchsetzt und somit als Öffnung 25 in das Innere des Reaktormantels 3 mündet. Diese Bohrung bzw. Öffnung 25 kann nach vorne spitzwinklig verjüngt sein und weist eine Länge auf, die kleiner als ihr mittlerer bzw. kleinster Durchmesser sein kann. Die Weite der Öffnung 25 ist wesentlich kleiner als die lichte Weite einer Schneckenbohrung 4, nämlich höchstens etwa 1/10 so groß.

Zwischen der Öffnung 25 und einem im Mantel des Ventilgehäuses 11 vorgesehenen Probenausgang 27 ist in dem Ventilgehäuse 11 eine Leitungsverbindung 26 gebildet, die mit einem vorderen Kegelventil 28 sowie simultan mit einem hinteren Schieberventil 29 geschlossen und geöffnet werden kann. Der im Ventilgehäuse 11 vorgesehene Ventilsitz 30 für das vordere Kegelventil 28 ist durch den Übergang zwischen der Öffnung 25 und der stumpfwinklig konischen inneren Übergangsschulter der Gehäusebohrung 16 gebildet, so daß der Ventilsitz 30 eine im Querschnitt von stumpfwinklig zueinander liegenden Flanken begrenzte Ringkante darstellt, die am hinteren Ende der die Öffnung 25 bildenden Bohrung liegt. Das vordere Ende des Ventilkörpers 20 ist als spitzwinkliger Kegelstumpf ausgebildet, dessen bis zum Außenumfang des Ventilkörpers 20 reichender kegelmantel einen kleineren Kegelwinkel als die innere Übergangsschulter des Ventilsitzes 30 und einen größeren Kegelwinkel als die Öffnung 25 aufweist. Im geschlossenen Zustand liegt dieser Kegelmantel unter Pressung am Ventilsitz 30 an.

Der Ventilsitz 32 des Schieberventiles 29 ist durch die Innenmantelfläche des den Ventilkörper 20 führenden Bohrungsabschnittes der Gehäusebohrung 16 gebildet und umgibt den inneren Durchtritt einer radialen, den Mantel des Ventilgehäuses 11 durchsetzenden Anschlußbohrung 34. Zum Öffnen und Schließen des Schieberventiles 29 weist der Ventilkörper 20 eine Steuerkante 33 auf, die im geschlossenen Zustand vor der Anschlußbohrung 34 liegt, so daß diese durch den Spindelschaft 22 verschlossen ist. Vor der Steuerkante 33 weist der Ventilkörper 20 am Umfang vorzugsweise gleichmäßig verteilte Nuten 35 in Form von Axialnuten auf, die bis zur vorderen Kegelmantelfläche reichen und somit bei geschlossenem Ventil mit ihren vorderen Enden in den an den Ventilsitz 30 anschließenden Ringraum münden, der von dieser Kegelmantelfläche und der inneren Übergangsschulter der Gehäusebohrung 16 begrenzt ist. Die Steuerkante 33 ist durch die hintere Seitenfläche einer Ringnut 36 gebildet, welche am Außenumfang des Ventilkörpers 20 vorgesehen ist und gleiche Nuttiefe wie die Nuten 35 aufweist. Die hinteren Enden der Nuten 35 münden in die Ringnut 36, deren Breite gegenüber ihrer Tiefe und gegenüber dem inneren Ende der Anschlußbohrung 34 mehrfach größer ist. Die Anschlußbohrung 34, die zweckmäßig einen äußeren Innengewindeabschnitt und einen inneren, die Gehäusebohrung 16 durchsetzenden glatten Abschnitt aufweist, liegt unmittelbar benachbart zum Außenumfang des Reaktormantels 3 zwischen diesem und dem vorderen Ende der Dichtung 17. Die Anschlußbohrung 34 kann an der Unterseite des Ventilgehäuses 11 bzw. von der Gehäusebohrung 16 nach unten gerichtet vorgesehen sein.

Für das Ventilgehäuse 11 bzw. insbesondere für die Leitungsverbindung 26 und den Ventilkörper 20 ist des weiteren eine Heizeinrichtung 37 vorgesehen, die als Fluidheizung ausgebildet ist. Zu diesem Zweck weist der mantel des Ventilgehäuses 11 am Außenumfang und zwar annähernd vom Gehäuseflansch 14 bis zum Außenumfang des Reaktormantels 3 eine flache Umfangs-Ausnehmung 38 nach Art einer gegenüber ihrer Nuttiefe wesentlich breiteren Ringnut auf, die jedoch über den Umfang unterschiedliche Axialerstreckung haben kann. Die Ausnehmung 38 ist an ihren beiden Enden jeweils von einem Ringbund 39 bzw. 40 begrenzt, von denen der hintere unmittelbar an die vordere Stirnfläche des Gehäuseflansches 14 anschließt. Der vordere Ringbund 40 reicht annähernd bis zum Außenumfang des Reaktormantels 3, jedoch liegt seine, die vordere Seitenbegrenzung der Ausnehmung 38 bildende, ringschulterförmige Seitenfläche auf der dem Probenausgang 27 bzw. dem Schieberventil 29 diametral gegenüberliegenden Seite des Ventilgehäuses 11 näher beim Reaktormantel 3 bzw. vorderen Ende des Ventilgehäuses 11 als im Bereich des Probenausganges 27, wo diese Seitenfläche unmittelbar hinter dem Probenausgang 27 bzw. etwa im Bereich der vorderen Stirnfläche der Dichtung 17 vorgesehen ist. Der vordere Bund 40 weist insofern über den Umfang unterschiedliche Breite derart auf, daß er von der Anschlußbohrung 34 durchsetzt ist. Auf die, gleiche Durchmesser aufweisenden Außenumfangsflächen der Ringbunde 39, 40 ist ein rohrförmiger Mantelkörper 42 so aufgeschoben, daß er annähernd an der vorderen Stirnfläche des Gehäuseflansches 14 anliegt. Dieser Mantelkörper 42, dessen vordere Stirnfläche entsprechend dem Verlauf der zugehörigen Seitenfläche der Ausnehmung 38 schräg ausgebildet ist, ist durch Schweißen, Löten o.dgl. dicht mit dem Ventilgehäuse 11 bzw. den Ringbunden 39, 40 verbunden. Durch die Ausnehmung 38 und den Mantelkörper 42 ist eine ringspaltförmige Temperierkammer 41 begrenzt, welche den Außenumfang des Ventilgehäuses 11 über die gesamte Länge der Dichtung 17 und im Bereich des Probenausganges 27 über den größten Teil des Gehäuseumfanges umgibt. An dem Mantelkörper 42 ist an einem, nämlich am vorderen Ende der Temperierkammer 41 und zwar dem Probenausgang 27 etwa diametral gegenüberliegend ein Eingangs-Anschluß 43 für Temperierflüssigkeit vorgesehen, während am anderen bzw. hinteren Ende ein Ausgangs-Anschluß 44 für die Temperaturflüssigkeit vorgesehen ist, der dem Eingangs-Anschluß 43 zweckmäßig diametral gegenüberliegt bzw. nach unten weggeführt. Die Anschlüsse 43, 44 können durch radial nach außen abstehende Anschlußstutzen gebildet sein, die mit dem Mantelkörper 42 durch Schweißen, Löten o.dgl. dicht und starr verbunden sind und jeweils ein Außengewinde für die Befestigung eines geeigneten Leitungsfittings aufweisen. Der vordere Anschluß 43 kann nahezu achsgleich zur Anschlußbohrung 34 liegen.

In geschlossenem Zustand des Ventiles liegt die Steuerkante 33 bzw. das hintere Ende der Ringnut 36 etwa in einer gemeinsamen, zur Ventilachse rechtwinkligen Ebene mit dem vorderen Ende der Temperierkammer 41 und unmittelbar vor der Anschlußbohrung 34. Durch Drehen der Spindel 21 in der entsprechenden Drehrichtung wird der Ventilkörper 20 ebenfalls gedreht und axial nach hinten bewegt, wobei der Gewindeabschnitt 23 und das zugehörige Innengewinde der Spannhülse 18 die entsprechende Stellagerung bilden. Bei dieser Bewegung löst sich die Ventilschließfläche 31 des Kegelventiles 28 sofort vom Ventilsitz 30, so daß der Öffnungsquerschnitt dieses Kegelventiles 28 zunimmt. Bis zum Erreichen eines bestimmten Öffnungsquerschnittes ist das Schieberventil 29 noch geschlossen, wobei jedoch dadurch, daß mit der genannten Axialbewegung die Ringnut 36 nach hinten bewegt wird, die Leitungsverbindung 26 stärker in den Einflußbereich der Heizeinrichtung 37 gelangt. Im weiteren Verlauf der Stellbewegung überläuft die Steuerkante 33 die Anschlußbohrung 34, so daß nunmehr auch das Schieberventil 29 beginnt zu öffnen, bis die Anschlußbohrung 34 über ihre gesamte Weite an die Ringnut 36 angeschlossen ist bzw. etwa in der Mitte von deren Breite liegt. Diese Öffnungsstellung ist in der Zeichnung strichpunktiert angedeutet. Das hintere Ende der Ringnut 36 liegt in diesem geöffneten Zustand mit geringem Abstand unmittelbar vor der Dichtung 17.

Die Funktionsweise des erfindungsgemäßen bzw. erfindungsgemäß verwendbaren Einspritz- und/oder Probeentnahme-Ventils in seiner bevorzugten Ausführungsform ist folgende:

Die Flüssigkeit wird durch den Eingang bzw. die Anschlußbohrung 34 und die ringnut 36 sowie die Nuten 35 in der Spindel 21 und durch den Ventilsitz 30 in den Reaktor hineingespritzt. Der hierzu nötige Druck, der stets höher sein muß als der im Reaktor herrschende Druck, wird von der Einspritzpumpe 7 erzeugt, welche die Flüssigkeit durch die zweckmäßigerweise beheizbar ausgebildete Leitung 6 in die Anschlußbohrung 34 drückt. Nach dem Einspritzvorgang wird das Ventil in der Regel wieder geschlossen, wobei zweckmäßig am vorderen Ende des Ventilkörpers 20 ein verhältnismäßig eng in die Öffnung 25 passender Ansatz vorgesehen ist, dessen vordere Stirnfläche bündig mit der vorderen Stirnfläche des Ventilgehäuses 11 abschließt, so daß die Öffnung 25 bei geschlossenem Ventil vollständig entleert ist und sich in ihr keine ruhenden Substanzen ansammeln können. Die einzuspritzende Flüssigkeit kann mit der Temperiereinrichtung je nach Bedarf sowohl gekühlt wie auch erwärmt bzw. erhitzt werden.

Das neue Ventil ermöglicht alternierend sowohl die Einspritzung als auch die Probeentnahme von Substanzen aus dem Reaktor 2. Zur Probeentnahme wird das Ventil in der beschriebenen Weise geöffnet, wobei die Flüssigkeit durch den im Reaktor herschenden Druck aus der Apparatur hinausgedrückt wird und der Analyse zugeführt werden kann. Damit das Ventil funktionstüchtig ist und auch wahlweise seine Doppelfunktion in der Praxis einwandfrei ausüben kann, ist zweckmäßig die als Stopfbüchse ausgebildete, mit der Spannhülse 18 nachstellbare Dichtung 17 vorgesehen. Die durch die Leitungsverbindung 26 entgegengesetzt zur Einspritzeinrichtung in die Anschlußbohrung 34 fließende Probenflüssigkeit kann durch dieselbe Leitung 6 zum Ventil 9 und von dort in die zweckmäßig ebenfalls beheizbare Abzweigleitung 8 geführt werden, aus deren Ende sie entnommen werden kann. Das Ventil 9 kann von Hand umstellbar oder so ausgebildet sein, daß es bei Unterdruck in der Leitung 6 die Abzweigleitung 8 absperrt und bei Überdruck in der Leitung 6 die Abzweigleitung 8 öffnet. Des weiteren kann die Leitung 6 über eine leicht lösbare Schnellverbindung an die Anschlußbohrung 34 angeschlossen sein, so daß sie für die Probeentnahme entfernt und die zu entnehmende Probensubstanz unmittelbar an der Anschlußbohrung 34 aufgefangen werden kann. Die Leitungsverbindung 26 ist sehr kurz, nämlich ausschließlich durch einen bzw. mehrere Axialabschnitte und einen einzigen Radialabschnitt gebildet.

Das folgende Beispiel veranschaulicht die Erfindung:

In die Öffnung einer jeden Temperierzone eines Reaktionsextruders ZE 60 A (Berstorff, Honnover, BRD) wird ein Einspritz- und Probenentnahmeventil gemäß der Zeichnung eingesteckt und festgeflanscht.

Mit diesem Reaktor wird eine Coplymerisation von Acrylsäure und Acrylat gemäß der DE-OS's 34 35 468 und 33 35 954 durchgeführt.

Diese Ventile können problemlos sowohl als Einspritzventile, etwa für Additivlösungen, als auch zur Proebentnahme verwendet werden. Das erfindungsgemäße Einspritzventil wird somit z. B. zur Durchführung von (Co)Polymerisationen, vorzugsweise bei Temperaturen bis 200 Cel und 100 bar verwendet. Entsprechend wird das Einspritzventil zur Durchführung von Copolymerisationen aus (Meth)Acrylsäure und (Meth)Acrlyten verwendet.

Werden anstelle der erfindungsgemäßen Ventile solche herkömmlicher Konstruktion verwendet, so verkleben dieselben. Zwar können diese Ventile zur Verhinderung der Verklebung beheizt werden, jedoch erfolgt dann der Durchtritt der Reaktionsschmelze ins Freie und beeinträchtigt die Umwelt.

## Ansprüche

1. Einspritz-Einrichtung für Reaktoren (2), insbesondere Polymerisations-Reaktoren, Reaktionsextruder o.dgl. mit mindestens einem für die Befestigung bzw. Verflanschung an dem Reaktor (2) ausgebildeten, an eine Einspritzpumpe (7) o.dgl. anschließbaren, ein Ventilgehäuse (11) aufweisenden Ventil (10) für Reaktionskomponenten o.dgl., dadurch gekennzeichnet, daß die Einrichtung (1) zur Entnahme von Proben aus dem Reaktor (2) und zur Einspritzung in den Reaktor (2) ausgebildet ist.

2. Einrichtung, insbesondere nach Anspruch 1, dadurch gekennzeichnet, daß das Einspritzventil (10) eine verschließ- und temperierbare, abgedichtete Leitungsverbindung (26) von einer reaktorseitigen Öffnung (25) zu einem außerhalb des Reaktors (2) liegenden Probenausgang (27) aufweist.

3. Einrichtung, insbesondere nach Anspruch 1 oder 2, dadurch gekennzeichnet, daß ein Ausgang des Einspritzventiles (10) für die Eingabe von Stoffen in den Reaktor (2) als reaktorseitige Öffnung (25) für die Ausgabe der Probe ausgebildet ist, deren mittlere Weite insbesondere höchstens ein Zehntel der lichten Weite des Reaktors (2) bzw. etwa ein Viertel der Innenweite des Ventilgehäuses (11) entspricht, wobei vorzugsweise bei geschlossenem Ventilkörper (20) das dem Reaktor zugehörige Ende des Einspritzventiles im wesentlichen bündig verschlossen ist bzw. das auch als Probeentnahmeventil ausgebildete Einspritzventil (10) ein Zweiwegeventil, insbesondere ein Eckventil ist.

4. Einrichtung, insbesondere nach einem der vorhergehenden Ansprüche, dadurch gekennzeichnet, daß die Leitungsverbindung (26) bzw. die reaktorseitige Öffnung (25) mit wenigstens einem gegenüber mindestens einem Ventilsitz (30 bzw. 32) bewegbar angeordneten Ventilkörper (20) verschließbar ist, daß vorzugsweise ein vorderer Ventilsitz (30) unmittelbar benachbart zur reaktorseitigen Öffnung (25) des Einspritzventiles (10) liegt, bzw. durch eine innere Übergangsschulter zwischen der reaktorseitigen Öffnung (25) und einer Führungsbohrung (16) für den Ventilkörper (20) gebildet ist und daß vorzugsweise ein Ventilsitz (30) als Kegelsitz ausgebildet ist sowie einen größeren Kegelwinkel als eine Ventilschließfläche (31) des Ventilkörpers (20) aufweist, wobei insbesondere der Kegelwinkel des Ventilsitzes (30) stumpfwinklig und der Kegelwinkel der Ventilschließfläche (31) spitzwinklig ist.

5. Einrichtung, insbesondere nach einem der vorhergehenden Ansprüche, dadurch gekennzeichnet, daß mindestens ein Ventilkörper (20) mit einer Spindel (21), insbesondere einer Gewindespindel zwischen einer Schließ- und einer Offenstellung bewegbar bzw. im wesentlichen achsparallel, insbesondere koaxial zur reaktorseitigen Öffnung (25) angeordnet ist und daß vorzugsweise mindestens ein Ventilkörper (20) durch das insbesondere einteilige vordere Ende der Spindel (21) gebildet ist.

6. Einrichtung, insbesondere nach einem der vorhergehenden Ansprüche, dadurch gekennzeichnet, daß die Leitungsverbindung (26) im wesentlichen durch mindestens eine Leitungsausnehmung im Ventilkörper (20) gebildet bzw. an einer Seite von einer glatten, ununterbrochenen Führungsfläche für den Ventilkörper (20) begrenzt ist, daß vorzugsweise die Leitungsverbindung (26) Nuten (35), insbesondere Axialnuten für die Probeentnahme unter dem Reaktordruck aufweist und daß vorzugsweise die Leitungsverbindung (26) eine, insbesondere im Ventilkörper (20) vorgesehene bzw. an dem von der reaktorseitigen Öffnung (25) abgekehrten Ende der mindestens einer Leitungsausnehmung liegende Ringnut (36) aufweist.

7. Einrichtung, insbesondere nach einem der vorhergehenden Ansprüche, dadurch gekennzeichnet, daß zur Abdichtung der Leitungsverbindung (26) eine, insbesondere nachstellbare bzw. durch einen Packungssatz einer Stopfbüchse gebildete Dichtung (17) vorgesehen ist, die vorzugsweise mit einer von einer Überwurfmutter (19) o.dgl. gesicherten Spannhülse (18) zusammengepreßt ist, daß insbesondere die von der Spindel (21) durchsetzte Spannhülse (18) eine Stellagerung, wie ein Innengewinde, für den Ventilkörper (20) aufweist und über das hintere Ende des Ventilgehäuses (11) vorsteht, an dem insbesondere die hülsenförmige Überwurfmutter (19) abgestützt ist und daß vorzugsweise die Dichtung (17) in dem Ventilgehäuse (11) um die Spindel (21), insbesondere um einen hinteren Abschnitt eines mit seinem vorderen Ende den Ventilkörper (20) bildenden Spindelschaftes (22) angeordnet ist.

8. Einrichtung, insbesondere nach einem der vorhergehenden Ansprüche, dadurch gekennzeichnet, daß ein hinterer Ventilsitz (32) als Schieberventilsitz ausgebildet ist, der insbesondere vor Erreichen der Schließlage des Ventilkörpers (20) von dessen Umfang geschlossen bzw. durch das innere Ende einer etwa radialen, den Probenausgang (27) bildenden Anschlußbohrung (34) im Ventilgehäuse (11) gebildet und vorzugsweise etwa in der Mitte zwischen der Dichtung (17) und dem Reaktor (2) vorgesehen ist, wobei insbesondere der Abstand der Anschlußbohrung (34) von der Dichtung (17) bzw. vom Reaktor (2) nur geringfügig größer als ihr Durchmesser ist.

9. Einrichtung, insbesondere nach einem der vorhergehenden Ansprüche, dadurch gekennzeichnet, daß zur Temperierung der Leitungsverbindung (26) am Einspritzventil (10) eine Heizeinrichtung (37), wie eine Fluidheizung, angeordnet ist, die vorzugsweise eine, insbesondere die Leitungsverbindung (26) wenigstens teilweise umgebende Temperierkammer (41) mit einem Ein- und einem Austritt für die Temperierflüssigkeit aufweist bzw. das Ventilgehäuse (11) wenigstens über einen Teil seiner Länge und/oder seines Umfanges mantelförmig umgibt, insbesondere annähernd bis an den Reaktor (2) bzw. den Probenausgang (27) reicht und daß vorzugsweise die Heizeinrichtung (37) eine zwischen zwei Ringbunden (39, 40) liegende Umfangsausnehmung (38) am Ventilgehäuse (11) aufweist, die von einem Mantelkörper (42) abgedeckt ist, welcher insbesondere Anschlußstutzen (43, 44) für einen Heizkreislauf aufweist.

10. Einrichtung, insbesondere nach Anspruch 9, dadurch gekennzeichnet, daß die Heizeinrichtung (37) im wesentlichen über die gesamte Länge der Dichtung (17) und insbesondere über diese nach vorne vorstehend vorgesehen ist, wobei vorzugsweise die Heizeinrichtung (37) wenigstens bei geöffnetem Ventilkörper (20) mindestens um einen Teilumfang der Ringnut (36) liegt, über das Ventilgehäuse (11) und die Spindel (21) wärmeleitend mit der Leitungsverbindung (26) verbunden ist, und insbesondere ein vorderer Endteil (12) des Ventilgehäuses (11) wärmeleitend mit dem Reaktor (2) verbunden ist.

EP 0 302 397 A2